# EUROPÄISCHE PATENTSCHRIFT

(11) **EP 4 105 730 B1**
(45) Veröffentlichungstag und Bekanntmachung des Hinweises auf die Patenterteilung: **18.12.2024**
(21) Anmeldenummer: 22179192.4
(22) Anmeldetag: 15.06.2022
(51) Int. Cl.: G03H 1/02, B32B 37/08, G03H 1/00, G03H 1/04, B65H 20/00, G03H 1/20, G11B 7/26

(54) **VORRICHTUNG ZUM HERSTELLEN VON HOLOGRAMMEN IM KONTAKTKOPIEVERFAHREN MIT HOHER BEUGUNGSEFFIZIENZ**
APPARATUS FOR THE PRODUCTION OF HOLOGRAMS BY CONTACT COPYING WITH HIGH DIFFRACTION EFFICIENCY
APPAREIL POUR LA FABRICATION D'HOLLOGRAMMES PAR COPIE DE CONTACT AVEC UNE GRANDE EFFICACITE DE DIFFRACTION

(30) Priorität: 15.06.2021 DE 102021206107
(43) Veröffentlichungstag der Anmeldung: 21.12.2022
(73) Patentinhaber: Bundesdruckerei GmbH, 10969 Berlin (DE)
(72) Erfinder: Bielesch, Ulrich, 56132 Frücht (DE); Rötzer, Martin, 85229 Markt Indersdorf (DE); Mauderer, Michael, 81825 München (DE); Langgaßner, Michael, 81245 München (DE); Frank, Alexander, 81243 München (DE); Karvounis, Gerasimos, 80687 München (DE); Gahlbeck, Jeffry, 15517 Fürstenwalde (DE); Sprenger, Martin, 10317 Berlin (DE); Kunath, Christian, 12203 Berlin (DE); Klünder, Kathrin, 10179 Berlin (DE); Uhlig, Florian, 15370 Petershagen (DE)
(74) Vertreter: Obst, Bernhard

(56) Entgegenhaltungen:
- DE-B4- 112006 002 839
- JP-A- 2007 041 360
- US-A- 5 297 005
- US-A1- 2003 179 424
- US-A1- 2010 003 606
- US-B2- 10 305 249

## Beschreibung

Die Erfindung betrifft eine Vorrichtung zum Herstellen von Hologrammen im Kontaktkopierverfahren, insbesondere von Hologrammen mit einer hohen Beugungseffizienz.

In Wert- und/oder Sicherheitsdokumenten werden Merkmale ausgebildet, welche eine Überprüfbarkeit der Echtheit und Unverfälschtheit des entsprechenden Wert- und/oder Sicherheitsdokuments gewährleisteten sollen. Solche Merkmale werden als Sicherheitsmerkmale bezeichnet.

Hologramme stellen eine Gruppe von Sicherheitsmerkmalen dar, die hierfür eingesetzt werden. Hologramme können grundsätzlich in zwei verschiedene Kategorien eingeteilt werden. Zum einen gibt es sogenannte dünne Hologramme, bei denen die holografische Information in einer Schicht gespeichert ist, deren Schichtstärke in der Größenordnung der Wellenlänge des Lichts bzw. der elektromagnetischen Strahlung liegt, mit der das Hologramm rekonstruiert werden kann. Häufig wird die holografische Information in Form eines Oberflächenreliefs an der Oberfläche gespeichert. Diese Hologramme werden dann als Oberflächenhologramme bezeichnet. Eine andere Klasse von Hologrammen, welche als sogenannte dicke Hologramme bezeichnet werden, speichern die holografische Information im Volumen eines Aufzeichnungsmaterials, wobei eine Schichtstärke des Speicherungsbereichs einem Vielfachen der Wellenlänge des Lichts bzw. der elektromagnetischen Strahlung entspricht, mit der das Hologramm rekonstruiert werden kann. Diese Hologramme werden auch als Volumenhologramme bezeichnet.

Während Oberflächenhologramme beispielsweise in Kunststoffschichten eingeprägt werden können, werden Volumenhologramme mittels einer Belichtung in ein fotoempfindliches Material gespeichert. Ein Herstellungsverfahren zum Herstellen von insbesondere Volumenreflexionshologrammen nutzt einen Hologrammmaster, vor dem ein holografisches Aufzeichnungsmaterial angeordnet wird. Beim Aufzeichnen bzw. Belichten des Hologramms in das holografische Aufzeichnungsmaterial wird kohärentes Licht durch das holografische Aufzeichnungsmaterial hindurch auf den Hologrammmaster eingestrahlt, der das Licht zumindest teilweise zurückwirft, beispielsweise reflektiert oder in Reflexion beugt. Im holografischen Aufzeichnungsmaterial interferiert dieses vom Hologrammmaster zurückgeworfene, z.B. in Reflexion gebeugte oder zurückgespiegelte, Licht mit dem kohärenten Licht, das durch das Aufzeichnungsmaterial auf den Hologrammmaster eingestrahlt wird. Das sich in dem Hologrammaufzeichnungsmaterial ausbildende Interferenzmuster wird in dem Hologrammaufzeichnungsmaterial, welches in der Regel ein fotoempfindliches Material ist, besonders bevorzugt ein Fotopolymer, gespeichert. Die physikalischen und/oder chemischen Veränderungen in dem fotoempfindlichen Material werden anschließend fixiert, sodass das fotoempfindliche Material gegenüber Strahlung unempfindlich wird und das Hologramm anschließend bei Einstrahlung von Licht rekonstruiert werden kann.

Die US 2003/179242 A1 zeigt einen Bildbelichtungsrekorder zur Belichtungsaufzeichnung eines holografischen Stereogrammbildes oder eines Hologrammbildes auf einem Aufzeichnungsmedium für Hologramme. Der Rekorder verfügt über ein inverses Korrektursystem zum Drehen der Polarisationsebene eines Referenzlichts mittels einer Halbwellenlängenplatte, zum Richten des Referenzlichts auf ein Hologramm-Aufzeichnungsmedium und zum Messen Intensität eines Teils des durch einen Polarisator durchgelassenen Referenzlichts aus dem durch einen Teil der Fläche des Hologramm-Aufzeichnungsmediums durchgelassenen Referenzlicht mittels eines Fotodetektors. Beim inversen Korrektursystem wird der Drehwinkel der Halbwellenlängenplatte so bestimmt, dass die vom Fotodetektor bestimmte Intensität des Referenzlichts minimal oder maximal sein kann. Daher wird die Verschlechterung der Kohärenz zwischen dem Objektlicht und dem Referenzlicht, die auf die Übertragung des Objekt- und Referenzlichts durch das Hologramm-Aufzeichnungsmedium mit Doppelbrechung zurückzuführen ist, verhindert und somit ein holografisches Stereogramm zur Wiedergabe eines hellen holografischen Stereogrammbilds hergestellt.

JP2007041360A zeigt eine Steuerung der Temperatur eines Hologramm-Aufzeichnungsmediums ohne Erhöhung des Stromverbrauchs. Das Innere eines Gehäuses wird durch die Wärmeerzeugung einer Laserlichtquelle oder einer Leiterplatte erwärmt. Wenn die Temperatur im Gehäuse über einen vorgegebenen Temperaturbereich ansteigt, betätigt ein Steuerschaltkreis einen Luftkühlventilator, um warme Luft im Gehäuse nach außen abzugeben und so die Temperatur im Gehäuse innerhalb des vorgegebenen Bereichs zu halten, wodurch ein Hologramm-Aufzeichnungsmedium vom Kartuschentyp innerhalb eines vorbestimmten Temperaturbereichs hält. Es erfolgt dann die Aufzeichnung und Wiedergabe eines Hologramms mit dem Hologramm-Aufzeichnungsmedium vom Kartuschentyp. Das heißt, durch Nutzung der Abwärme wärmeerzeugender Komponenten kann die Temperatur des Hologramm-Aufzeichnungsmediums gesteuert werden, ohne dass der Stromverbrauch steigt.

Die DE 11 2006 002 839 B4 beschreibt eine Anordnung aus einer elektrischen Vorrichtung eine Hybridfarhzeugs und einer Kühlstruktur für die elektrische Vorrichtung, wobei die Kühlstruktur Folgendes aufweist: eine Mehrzahl von Kühlmittelwegen, durch die ein Kühlmittel für die elektrische Vorrichtung strömt, einen Einlass, in den das den mehreren Kühlmittelwegen zuzuführende Kühlmittel einströmt, und einen zwischen dem Einlass und den mehreren Kühlmittelwegen vorgesehenen Kühlmittelverteilmechanismus zur Förderung der Verteilung des Kühlmittels auf jeden der Kühlmittelwege, wobei der Kühlmittelverteilmechanismus eine Wand aufweist, die sich in einer Richtung erstreckt, die eine Ausrichtungsrichtung des Einlasses und der mehreren Kühlmittelwege schneidet, dadurch gekennzeichnet, dass die Wand einen Abschnitt aufweist, der so ausgebildet ist, dass eine Höhe von diesem bezogen auf eine Richtung senkrecht zu der Ausrichtungsrichtung und senkrecht zu der Erstreckungsrichtung der Wand mit zunehmendem Abstand vom Einlass niedriger wird.

Da das holografische Aufzeichnungsmaterial während des Belichtungsvorgangs vorzugsweise in Kontakt mit dem Hologrammmaster gebracht wird, um eine Relativbewegung des Aufzeichnungsmaterials gegenüber dem Hologrammmaster zu vermeiden, wird ein solches Belichtungsverfahren auch Kontaktkopierverfahren genannt.

Im Stand der Technik wird das holografische Aufzeichnungsmaterial entweder in Form von Bögen oder als Rollenmaterial dem Belichtungsprozess zu- und wieder abgeführt.

Eine Qualität des so hergestellten Hologramms zeigt sich darin, wie hoch die Beugungseffizienz des in dem Kontaktkopierverfahren hergestellten Hologramms ist. Je höher die Beugungseffizienz ist, desto besser ist die hergestellte Kopie. Es versteht sich für den Fachmann, dass die Beugungseffizienz teilweise durch die Qualität des Hologrammmasters begrenzt ist. Es hat sich jedoch gezeigt, dass bei der Herstellung von einer Vielzahl von Hologrammen im Kontaktkopierverfahren die Qualität der so hergestellten Hologramme variiert. Eine solche Variation ist für Hologramme, die als Sicherheitsmerkmale eingesetzt werden sollen, unerwünscht.

Der Erfindung liegt somit die technische Aufgabe zugrunde, eine Vorrichtung und ein Verfahren zur Herstellung von Hologrammen im Kontaktkopierverfahren zu schaffen, die eine möglichst gleichbleibende hohe Beugungseffizienz der hergestellten Hologramme gewährleisten.

Die Aufgabe wird durch eine Vorrichtung mit den Merkmalen des Patentanspruchs 1 sowie ein Verfahren mit den Merkmalen des Patentanspruchs 7 gelöst. Vorteilhafte Ausführungsformen der Erfindung ergeben sich aus den Unteransprüchen.

### Grundidee der Erfindung

Die Erfindung basiert auf der Grundidee, dass die Reaktionsbedingungen in dem holografischen Aufzeichnungsmaterial möglichst optimal gehalten werden müssen. Während bei der Erzeugung der kohärenten Strahlung, welches in der Regel Laserstrahlung ist, hohe thermische Verluste auftreten, die dann teilweise in eine Reaktionskammer, in der die Belichtung des Aufzeichnungsmaterials stattfindet, eingebracht werden, kommt es insbesondere zu thermischen Veränderungen, die nach Erkenntnis der Erfinder vermutlich für die Schwankung und insbesondere eine Verschlechterung der Beugungseffizienz während der Herstellung einer Vielzahl von Hologrammen verantwortlich sind. Zwar ist es bekannt, dass auch ein Hologrammmaster einem Verschleiß unterliegen kann, jedoch sind die damit einhergehenden Veränderungen in der Beugungseffizienz auf einer gänzlich anderen, viel größeren Zeitskala zu beobachten, als die ansonsten beobachteten Veränderungen in der Beugungseffizienz der im Kontaktkopierverfahren hergestellten Hologramme.

### Definitionen

Als Volumenhologramm wird ein Hologramm bezeichnet, bei dem die holografische Information in einem Volumenbereich gespeichert ist, dessen Stärke größer als ein Vielfaches der Wellenlänge der elektromagnetischen Strahlung ist, mit der das Hologramm rekonstruiert werden kann. In der Regel entspricht die Stärke dieser Schicht mindestens dem Fünf- bis Fünfzehnfachen der Wellenlänge der elektromagnetischen Strahlung, die zur Aufzeichnung verwendet wird.

Als Kontaktkopierverfahren wird ein Verfahren zur Herstellung von Hologrammen bezeichnet, bei dem ein holografisches Aufzeichnungsmaterial anliegend an einen Hologrammmaster angeordnet wird.

Bei der Herstellung von Volumenreflexionshologrammen wird die zur Aufzeichnung verwendete elektromagnetische Strahlung durch das holografische Aufzeichnungsmaterial hindurch auf den Hologrammmaster eingestrahlt, der einen Teil dieser Strahlung in das holografische Aufzeichnungsmaterial zurückwirft, beispielsweise reflektiert oder reflektierend beugt. Das zwischen der eingestrahlten elektromagnetischen Strahlung und der vom Hologrammmaster zurückgeworfenen Strahlung entstehende Interferenzmuster wird in dem holografischen Aufzeichnungsmaterial in der Form von lokalen Veränderungen, insbesondere in Form von Brechungsindexänderungen, gespeichert. Dieses gilt insbesondere für Fotopolymere. In anderen Aufzeichnungsmaterialien kann die Speicherung auch in Form von Schwärzungen erfolgen.

Ein Hologrammmaster ist in der Regel selbst ein Volumenreflexionshologramm und kann auf beliebige Art und Weise hergestellt sein. Bei anderen Ausführungsformen kann der Hologrammmaster jedoch auch eine facettierte Oberfläche sein, beispielsweise ein Blazegitter oder Ähnliches.

Bei wieder anderen Ausführungsformen kann vorgesehen sein, dass die hergestellten Hologramme Transmissionshologramme sind, welche im Kontaktkopierverfahren hergestellt sind, in dem der Hologrammmaster für die zum Belichten verwendete elektromagnetische Strahlung transparent ist und nur ein Teil der elektromagnetischen Strahlung gebeugt wird. In diesem Fall wird das Licht durch den Hologrammmaster in das auf der von der Einstrahlungsseite abgewandten Seite in Kontakt mit dem Hologrammmaster angeordnete holografische Aufzeichnungsmaterial gestrahlt. Ein Teil der den Hologrammmaster durchstrahlenden elektromagnetischen Strahlung wird nicht gebeugt, ein anderer Teil hingegen gebeugt. Hierdurch entsteht erneut ein Interferenzmuster in dem holografischen Aufzeichnungsmaterial, welches ein Volumentransmissionshologramm ausbildet.

Als Reaktionskammer wird ein Raum oder eine Kammer bezeichnet, in dem bzw. in der das Belichten des holografischen Aufzeichnungsmaterials erfolgt. Die Reaktionskammer ist gegenüber einer Umgebung strahlungsdicht abgeschlossen, um eine Einstrahlung von Umgebungslicht oder anderer Strahlung zu verhindern, die Veränderungen in dem holografischen Aufzeichnungsmaterial auslösen können. Die strahlungsdichte Abschirmung ist in der Regel ferner so ausgebildet, dass sie auch einen Eintrag von Schmutz- und Staubpartikeln in die Reaktionskammer verhindert, welche den Hologrammmaster und/oder das holografische Aufzeichnungsmaterial verschmutzen und/oder beschädigen könnten.

Als Licht wird elektromagnetische Dipolstrahlung angesehen, deren Wellenlänge im sichtbaren Wellenlängenbereich, im UV-Wellenlängenbereich oder im IR-Wellenlängenbereich liegt.

Ein Wärmerohr ist eine Vorrichtung zum Transportieren von Wärme, d.h. thermischer Energie. In dem Wärmerohr ist ein Arbeitsmedium eingeschlossen, das an einem Ende in einem flüssigen Aggregatszustand vorliegt. An diesem geheizten Ende nimmt das Arbeitsmedium Wärmeenergie auf und kühlt hierdurch die Umgebung des geheizten Endes. Das Arbeitsmedium wird hierdurch in den gasförmigen Aggregatszustand überführt und breitet sich im Wärmerohr aus. An einem gekühlten Ende gibt das Arbeitsmedium Wärmeenergie ab und führt einen Phasenübergang zurück in den flüssigen Aggregatszustand aus. Das Arbeitsmedium gelangt dann bei einer als Zwei-Phasen-Siphon bezeichneten Ausführungsform schwerkraftgetrieben an das geheizte Ende. Bei einer sogenannten Heatpipe-Ausführungsformen erfolgt der Rücktransport des Arbeitsmediums über Kapillarkräfte.

Transparent ist ein Medium für Licht, wenn durch das Medium hindurch mit dem Licht eine Abbildung gemäß der geometrischen Optik möglich ist. Insbesondere absorbiert das transparente Medium das Licht nicht nennenswert und streut das transparente Medium das Licht nicht diffus. Eine Absorption des Lichts im Zusammenhang mit Belichtungsvorgängen in einem fotoempfindlichen Material bleibt hierbei außer Betracht.

### Bevorzugte Ausführungsformen

Die Erfindung schafft eine Vorrichtung zum Herstellen von Hologrammen im Kontaktkopierverfahren umfassend
einen Hologrammmaster,
eine kohärente Lichtquelle zum Erzeugen kohärenten Lichts,
eine Transporteinrichtung zum Zu- und Abführen von holografischem Aufzeichnungsmaterial, so dass dieses für einen Belichtungsvorgang anliegend an und vor dem Hologrammmaster angeordnet wird, und
eine Reaktionskammer, die den Hologrammmaster umgibt und das holografische Aufzeichnungsmaterial während des Belichtungsvorgangs vor Umgebungslicht und Fremdmaterial schützt, wobei das kohärente Licht der kohärenten Lichtquelle während des Belichtungsvorgangs in die Reaktionskammer eingestrahlt wird, so dass das kohärente Licht das anliegend an und vor dem Hologrammmaster angeordnete holografische Aufzeichnungsmaterial durchstrahlt und zumindest teilweise an dem Master zurückgestrahlt wird, so dass im Innern des holografischen Aufzeichnungsmaterials aufgrund von Interferenzen zwischen dem das holografische Aufzeichnungsmaterial durchstrahlenden kohärenten Licht und dem zumindest teilweise vom Hologrammmaster zurückgestrahlten Licht Änderungen herbeigeführt werden, die ein Hologramm ausbilden, oder so dass der Hologrammmaster durchstrahlt wird, so dass ein Anteil des kohärenten Lichts den Hologrammmaster unverändert passiert und ein weiterer Anteil des kohärenten Lichts an dem Holgrammmaster abgelenkt wird, so dass aufgrund von Interferenzen zwischen dem einen unveränderten Anteil des kohärenten Lichts und dem weiteren abgelenkten Anteil des kohärenten Lichts im Innern des anliegend an und hinter dem Hologrammmaster angeordneten holografischen Aufzeichnungsmaterial Änderungen herbeigeführt werden, die das Hologramm ausbilden,
wobei eine Kühlvorrichtung zum Abführen von Wärme aus der Reaktionskammer ausgebildet ist, wobei mit dem Hologrammmaster mindestens ein Element der Kühlvorrichtung wärmeleitend verbunden ist, um den Hologrammmaster zu kühlen.

Ferner wird ein Verfahren zum Herstellen von Hologrammen in einem Kontaktkopierprozess geschaffen, welches umfasst:
(a) Bereitstellen eines Hologrammmasters in einer Reaktionskammer, die den Hologrammmaster umgibt und vor Umgebungslicht und Fremdmaterial schützt,
(b) Zuführen von holografischem Aufzeichnungsmaterial in eine Reaktionskammer, die den Hologrammmaster umgibt, so dass das holografische Aufzeichnungsmaterial für einen Belichtungsvorgang anliegend an dem Hologrammmaster angeordnet wird,
(c) Ausführen eines Belichtungsvorgangs, indem kohärentes Licht erzeugt und in die Reaktionskammer eingestrahlt wird, so dass das kohärente Licht das anliegend an dem Hologrammmaster angeordnete holografische Aufzeichnungsmaterial durchstrahlt und zumindest teilweise an dem Master zurückgestrahlt wird, so dass im Innern des holografischen Aufzeichnungsmaterials aufgrund von Interferenzen zwischen dem das holografische Aufzeichnungsmaterial durchstrahlenden kohärenten Licht und dem zumindest teilweise vom Hologrammmaster zurückgestrahlten Licht Änderungen herbeigeführt werden, die ein Hologramm ausbilden, oder so dass der Hologrammmaster durchstrahlt wird und ein Anteil des kohärenten Lichts den Hologrammmaster unverändert passiert und ein weiterer Anteil des kohärenten Lichts an dem Holgrammmaster abgelenkt wird, so dass aufgrund von Interferenzen zwischen dem einen unteränderten Anteil des kohärenten Lichts und dem weiteren abgelenkten Anteil des kohärenten Lichts im Innern des anliegend an dem Hologrammmaster angeordneten holografischen Aufzeichnungsmaterial Änderungen herbeigeführt werden, die das Hologramm ausbilden,
(d) Abführen des holografischen Aufzeichnungsmaterials aus der Reaktionskammer,
   dadurch gekennzeichnet, dass
(e) mittels einer Kühlvorrichtung Wärme aus der Reaktionskammer abgeführt wird, wobei mit dem Hologrammmaster mindestens ein Element der Kühlvorrichtung wärmeleitend verbunden ist, um den Hologrammmaster zu kühlen.

Indem die Reaktionskammer gekühlt wird, wird erreicht, dass der Belichtungsprozess jeweils optimal abläuft. Entgegen der Annahme, dass die Belichtung bei höheren Temperaturen einfacher ablaufen würde und eine benötigte Lichtintensität zum Ausbilden des Hologramms in dem holografischen Aufzeichnungsmaterial geringer wäre, haben die Erfinder festgestellt, dass eine zu hohe Temperatur und eine schwankende Temperatur in der Reaktionskammer zu einem Absinken der Beugungseffizienz der hergestellten Hologramme und zu Schwankungen der Beugungseffizienz führen. Durch das Kühlen der Reaktionskammer wird somit erreicht, dass Hologramme mit gleichbleibend hoher Beugungseffizienz im Kontaktkopierverfahren hergestellt werden.

Gemäß einer Ausführungsform ist vorgesehen, dass die Kühlvorrichtung ein Kühlfluid in die Reaktionskammer einströmt. In die Reaktionskammer wird somit Kühlfluid eingeströmt, welches gasförmig ist. Hierfür eignet sich vorzugsweise gekühlte, trockene, staubfreie Luft. Insbesondere bei einer gasdichten Auslegung der Reaktionskammer können jedoch auch andere Gase, wie beispielsweise CO₂, Stickstoff, verwendet werden.

Vorzugsweise ist die Reaktionskammer so ausgebildet, dass das Kühlfluid in einem unteren Bereich in die Reaktionskammer einströmt.

Ebenfalls vorzugsweise ist die Reaktionskammer so ausgebildet, dass erwärmtes Kühlfluid in einem oberen Bereich der Reaktionskammer aus dieser ausströmt.

Besonders bevorzugt wird das Kühlfluid in einem geschlossenen Kreislauf geführt.

In einer bevorzugten Ausführungsform wird das gekühlte Kühlfluid in einem unteren Bereich in die Reaktionskammer eingeströmt und strömt in einem oberen Bereich der Reaktionskammer aus dieser aus und wird in einem geschossenen Kühlkreislauf geführt und abgekühlt, bevor es wieder in dem unteren Bereich in die Reaktionskammer eingeströmt wird.

Bei einer anderen Ausführungsform ist vorgesehen, dass alternativ und/oder zusätzlich Wärme aus der Reaktionskammer mit mindestens einem Wärmerohr abgeführt wird. Bei einer bevorzugten Ausführungsform umfasst die Kühlvorrichtung mindestens ein Wärmerohr. In einem Wärmerohr befindet sich in einem ersten Abschnitt, der in die Reaktionskammer hineinragt, ein Arbeitsmedium in einem flüssigen Aggregatzustand. Über Wände des Wärmerohrs wird das Arbeitsmedium erwärmt und entzieht somit der Reaktionskammer Wärmeenergie. Hierdurch wird das Arbeitsmedium teilweise in einen gasförmigen Zustand versetzt und bewegt sich in einen zweiten Bereich des Wärmerohrs. In diesem Bereich wird erneut über die Oberfläche des Wärmerohrs Wärmeenergie an eine Energiesenke abgegeben, wodurch der Aggregatzustand des Arbeitsmediums vom gasförmigen zurück in den flüssigen Zustand gewandelt wird. Bei einer als Zwei-Phasen Thermosiphon bezeichneten Ausführungsform bewegt sich das flüssige Arbeitsmedium schwerkraftgetrieben wieder in den ersten Bereich, um dort erneut in der Reaktionskammer erwärmt zu werden. Bei einer als Heatpipe bezeichneten Ausführungsform, bei der sich im Inneren des Wärmerohrs beispielsweise ein Kupferdrahtgeflecht befindet, erfolgt der Rücktransport getrieben durch Kapillarkräfte. Dieser zyklische Prozess erfolgt in dem Wärmerohr, ohne dass mechanische Komponenten bewegt werden. Daher ist ein Wärmerohr sehr verschleiß- und wartungsarm. Ferner arbeitet ein Wärmerohr vibrations- und erschütterungsfrei.

Bei wieder einer anderen Ausführungsform ist zusätzlich zu der wärmeleitenden Verbindung des Hologrammmasters mit dem mindestens einen Element der Kühlvorrichtung, um den Hologrammmaster zu kühlen, ein Einströmen von Kühlfluid und/oder das Verwenden mindestens eines Wärmerohres vorgesehen. Bei dem mindestens einen Element kann es sich beispielsweise um ein Kühlregister oder eine wärmeleitende Platte, beispielsweise aus einem wärmeleitenden Metall, handeln, die mit einem Wärmetauscher in Kontakt steht. Beispielsweise kann der Hologrammmaster in eine Halterung integriert sein, welche wiederum von Rohrleitungen durchzogen ist, durch die ein Kühlfluid strömt. Das Kühlfluid kann hierbei flüssig oder auch gasförmig sein. Bei einigen

Ausführungsformen sind der Hologrammmaster und/oder andere zu kühlende Bauteile der Reaktionskammer wärmeleitend in Kontakt mit dem mindestens einen Wärmerohr und/oder einem weiteren oder anderen Element der Kühlvorrichtung angeordnet.

Die Kühlvorrichtung gibt die Wärme, die diese aus der Reaktionskammer abgeführt hat, vorzugsweise an eine Energiesenke ab. Hierdurch wird die Wärmeenergie aus der Vorrichtung komplett abgeführt. Dies verhindert, dass sich die Vorrichtung während der Herstellung von Hologrammen insgesamt erwärmt.

Bei einer bevorzugten Ausführungsform ist die Energiesenke eine sekundäre Fluidströmung. Dies ist beispielsweise ein Kühlkreislauf, in dem Wasser als sekundäres Kühlfluid verwendet wird. Alternativ kann das sekundäre Kühlfluid auch ein kaltes Gas sein. Wieder alternativ kann die Energiesenke auch ein Material sein, welches bei Erwärmung seinen Aggregatzustand ändert, beispielsweise Trockeneis oder Eis auf Wasserbasis.

Die Energiesenke kann jedoch auch zusätzlich oder alternativ eine Kältemaschine umfassen oder sein.

Es versteht sich für den Fachmann, dass bei der Herstellung die Verfahrensschritte b) bis d) iterativ ausgeführt werden, während der Verfahrensschritt e) ausgeführt wird. Dies bedeutet, dass mehrere Hologramme hergestellt werden, während die Reaktionskammer kontinuierlich gekühlt wird.

Es hat sich gezeigt, dass eine Abkühlung in den Bereich der Normaltemperatur von etwa 21°C oder ungefähr 294 Kelvin einen guten Kompromiss hinsichtlich einer hohen Beugungseffizienz und eines Energieverbrauchs für eine Kühlung und einer benötigten Isolierung der Reaktionskammer gegenüber einer Umgebung darstellt.

Nachfolgend wird die Erfindung unter Bezugnahme auf eine Zeichnung näher erläutert. Hierbei zeigen:

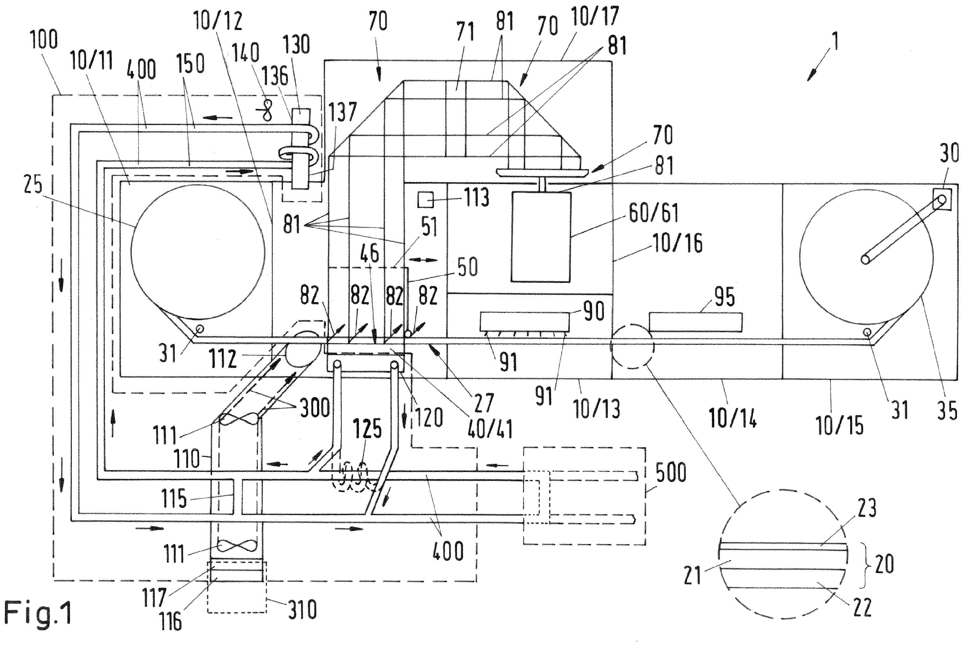

- Fig. 1: eine schematische Darstellung einer Vorrichtung zum Herstellen von Hologrammen im Kontaktkopierverfahren.

In Fig. 1 ist schematisch eine Vorrichtung 1 zum Herstellen von Hologrammen im Kontaktkopierverfahren dargestellt. Die Vorrichtung 1 umfasst eine Vielzahl von Kammern 10. In einer Zuführkammer 11 wird auf einer Vorratsrolle 25 holografisches Aufzeichnungsmaterial 20 bereitgestellt. Das holografische Aufzeichnungsmaterial 20 umfasst in der Regel eine Fotopolymerschicht 21. Zusätzlich umfasst das holografische Aufzeichnungsmaterial 20 in der Regel eine Trägerschicht 22, auf die die Fotopolymerschicht 21 aufgebracht ist. Optional kann auf der von der Trägerschicht 22 abgewandten Seite der Fotopolymerschicht 21 eine Schutzschicht 23 vorgesehen sein. Sowohl die Trägerschicht 22 als auch die Schutzschicht 23 sind transparent ausgebildet, d.h. durch sie hindurch ist eine Abbildung gemäß der geometrischen Optik möglich. Dies bedeutet ferner, dass in den Schichten keine nennenswerte Absorption und/oder diffuse Streuung stattfindet.

Das holografische Aufzeichnungsmaterial 20 wird durch eine Reaktionskammer 12, eine UV-Fixierkammer 13 sowie eine thermische Fixierkammer 14 in eine Speicherkammer 15 geführt, wo das holografische Aufzeichnungsmaterial 20, nachdem in dieses Hologramme belichtet sind, auf einer Speicherrolle 35 aufgerollt und aufgenommen wird. Der Transport des holografischen Aufzeichnungsmaterials wird von einer Transporteinrichtung 30 bewerkstelligt, die beispielsweise die Speicherrolle 35 sowie gegebenenfalls weitere Transportrollen 31 antreibt. Die Transporteinrichtung 30 zum Zu- und Abführen vom holografischen Aufzeichnungsmaterial in die Reaktionskammer 12 kann auch beliebig anders ausgebildet sein.

Die einzelnen Kammern 10, insbesondere die Zuführkammer 11, die Reaktionskammer 12 sowie die UV-Fixierkammer 13, schützen das holografische Aufzeichnungsmaterial vor Einstrahlung von Licht von außerhalb der Vorrichtung 1. Darüber hinaus schützen sie das holografische Aufzeichnungsmaterial 20 und die darin befindlichen Einrichtungen gegenüber anderen Umwelteinflüssen, wie insbesondere Staub und Schmutz.

In der Reaktionskammer 12 wird das holografische Aufzeichnungsmaterial 20 anliegend an einen Hologrammmaster 40 angeordnet. Vorzugsweise ist der Hologrammmaster 40 ein Master-Volumen-Reflexionshologramm 41.

Um einen guten Kontakt zwischen dem holografischen Aufzeichnungsmaterial 20 und dem Hologrammmaster 40 zu gewährleisten, wird das holografische Aufzeichnungsmaterial 20 beispielsweise mittels eines beweglichen Rakels 50 mit einer Unterseite 27 des holografischen Aufzeichnungsmaterials 20 mit einer Oberseite 46 des Hologrammmasters 40 in Kontakt gebracht. Hierfür ist der Rakel 50 mit einer Rakelantriebs- und Führungseinrichtung 51 verbunden, die hier nur schematisch angedeutet ist.

In einer Laserkammer 16 wird in einer kohärenten Lichtquelle 60 kohärentes Licht 81 erzeugt. In der Regel ist die kohärente Lichtquelle 60 ein Laser 61. Das kohärente Licht 81 tritt aus der Laserkammer 16 in eine Optikkammer 17 ein. Mittels einer Strahlformungs- und -führungsoptik 70 wird das kohärente Licht 81 aufgeweitet, geformt und umgelenkt und durch das holografische Aufzeichnungsmaterial 20 auf den Hologrammmaster 40 geführt. Die Strahlformungs- und -führungsoptik 70 befindet sich in einer Optikkammer 17, die oberhalb der Reaktionskammer 12 und der Laserkammer 16 ausgebildet ist. Aus der Optikkammer 17 tritt somit das zum Belichten verwendete kohärente Licht 81 der kohärenten Lichtquelle 60 in die Reaktionskammer 12 ein. Nachdem das kohärente Licht 81 das holografische Aufzeichnungsmaterial 20 passiert hat, trifft dieses auf den Hologrammmaster 40 und wird dort zumindest teilweise zurückgeworfen. Ist der Hologrammmaster 40 als Volumenreflexionshologramm ausgebildet, so wird das kohärente Licht 81 als gebeugtes Licht 82 zurückgeworfen. An anderen Hologrammmastern kann das kohärente Licht auch reflektiert werden, beispielsweise sofern der Hologrammmaster facettiert beispielsweise als Blazegitter oder Ähnliches ausgebildet ist. Das zurückgeworfene, in der Regel gebeugte Licht 82 interferiert in dem holografischen Aufzeichnungsmaterial 20 mit dem zur Belichtung eingestrahlten kohärenten Licht 81. Hierdurch werden in dem holografischen Aufzeichnungsmaterial 20 lokale Änderungen bewirkt. Ist das holografische Aufzeichnungsmaterial 20 als Fotopolymer ausgebildet, werden chemische Reaktionen ausgelöst, die zu Änderungen des Brechungsindex in der Fotopolymerschicht 21, d.h. dem holografischen Aufzeichnungsmaterial 20, führen. Die hierdurch gespeicherte Interferenzstruktur wird als Hologramm bezeichnet. Die Belichtung des Hologramms in das holografische Aufzeichnungsmaterial 20 kann zeitgleich flächig oder abtastend erfolgen, indem das kohärente Licht 81 das holografische Aufzeichnungsmaterial 20 und den darunter befindlichen Hologrammmaster 40 beispielsweise linienförmig überstreift.

Die Strahlformungs- und -führungsoptik 70 kann optional einen räumlichen Lichtmodulator 71 umfassen, um die Intensität des zum Belichten verwendeten kohärenten Lichts 81 räumlich zu modulieren. Hierüber wird erreicht, dass beispielsweise bei einem eine homogene leuchtende Fläche, beispielsweise einer Streuscheibe, darstellenden Masterhologramm diese leuchtende Fläche lokal unterschiedlich "hell" in das Hologramm belichtet wird. Hierüber ist eine Individualisierung des Hologramms möglich.

Der Hologrammmaster kann ausgebildet sein, ein einzelnes Hologramm oder eine Mehrzahl von Hologrammen in einem Mehrfachnutzen während eines Belichtungsvorgangs zu erzeugen. Das holografische Aufzeichnungsmaterial 20 wird bei der dargestellten Ausführungsform nicht kontinuierlich, sondern schrittweise mittels der Transporteinrichtung 30 durch die verschiedenen Kammern 10 bewegt. Nachdem in der Reaktionskammer 12 in das holografische Aufzeichnungsmaterial 20 ein Hologramm belichtet wurde, wird das holografische Aufzeichnungsmaterial 20 zunächst in die UV-Fixierkammer 13 und anschließend in die thermische Fixierkammer 14 bewegt. In der UV-Fixierkammer 13 wird das holografische Aufzeichnungsmaterial mit ultravioletter Strahlung bestrahlt. In der thermischen Fixierkammer 14 wird das holografische Aufzeichnungsmaterial erwärmt, beispielsweise über Infraroteinstrahlung. In den beiden Fixierkammern 13, 14 wird bewirkt, dass das holografische Aufzeichnungsmaterial seine Fotoempfindlichkeit verliert und zugleich das Hologramm permanent in dem holografischen Aufzeichnungsmaterial 20 in Form der Brechungsindexänderungen gespeichert wird. Bei anderen holografischen Aufzeichnungsmaterialien können andere Nachbearbeitungsschritte zum Entwickeln und/oder Fixieren des Hologramms notwendig und vorgesehen sein.

Es hat sich herausgestellt, dass eine erreichbare Beugungseffizienz in den auf diese Weise kopierten Hologrammen gesteigert werden kann, wenn die Reaktionskammer 12 gekühlt wird. Hierfür ist eine Kühlvorrichtung 100 vorgesehen. In Fig. 1 ist eine Kühlvorrichtung 100 schematisch dargestellt, die unterschiedliche Kühleinrichtungen und/oder Kühlvarianten vereinigt. Es versteht sich für den Fachmann, dass andere Ausführungsformen nur eine und gegebenenfalls alternativ ausgebildete Kühlvariante umfassen können.

Eine Kühlvariante besteht darin, dass ein Kühlfluid 300 in die Reaktionskammer eingeströmt wird. Vorzugsweise ist das Kühlfluid 300 ein abgekühltes Gas oder Gasgemisch. Besonders bevorzugt ist dieses wasserfrei. Das Fluid 300 wird vorzugsweise mittels einer Fluideinströmeinrichtung 110 in die Reaktionskammer 12 eingeströmt. Die Fluideinströmeinrichtung 110 umfasst beispielsweise ein oder mehrere Zuführgebläse 111, die das Kühlfluid 300 zu einer Einströmöffnung 112 fördern. Nachdem das Kühlfluid 300 in der Reaktionskammer 12 erwärmt ist, strömt dieses vorzugsweise in einem oberen Bereich der Reaktionskammer aus einer oder mehreren Ausströmöffnungen 113 aus. Das Kühlfluid 300 kann einer Umgebung der Vorrichtung 1 entnommen oder aus einem Vorratsspeicher 310 beispielsweise einer Druckgasflasche stammen. Insbesondere wenn das Kühlfluid 300 aus der Umgebung entnommen wird, kann die Kühlvorrichtung eine Reinigungs- und Filtereinheit 116 umfassen. Vorzugsweise kann zusätzlich eine Trocknungseinheit 117 vorgesehen sein, mittels der in dem aus der Umgebung aufgenommenen Fluid enthaltenes Wasser entzogen und/oder auskondensiert wird. Das Kühlfluid 300 wird vorzugsweise an einer Wärmetauschereinheit 115 vorbeigeführt und gegenüber einer Umgebung abgekühlt. Das Kühlfluid 300 wird vorzugsweise auf Höhe des Hologrammmasters 40 und/oder des holografischen Aufzeichnungsmaterials 20 in die Reaktionskammer 12 eingeströmt, sodass das holografische Aufzeichnungsmaterial 20 und der Hologrammmaster 40 gekühlt werden.

Die Wärmetauschereinheit 115 wird vorzugsweise von einem sekundären Kühlfluid 400 durchströmt und nimmt die von dem Kühlfluid 300 abgegebene Wärme auf und führt diese an eine Energiesenke 500 ab. Dieses kann eine Kältemaschine oder auch ein Kühlwasserkreislauf sein.

Die dargestellte Ausführungsform der Kühlvorrichtung 100 weist als weitere Kühlvariante ein Kühlregister 120 auf, welches direkt oder über eine Wärmeleiterplatte mit dem Hologrammmaster 40 wärmeleitend verbunden ist. Das Kühlregister 120 wird vorzugsweise von dem sekundären Kühlfluid 400 durchströmt, welches die vom Hologrammmaster aufgenommene Wärmeenergie an die Energiesenke 500 abgibt.

In der dargestellten Ausführungsform umfasst die Kühlvorrichtung 100 zusätzlich als Kühlvariante ein Wärmerohr 130. Im Innern des Wärmerohrs befindet sich ein Arbeitsmedium, welches sich in einem unteren Bereich 137 des Wärmerohrs als Flüssigkeit sammelt. Über die Außenwand des Wärmerohrs, welches in die Reaktionskammer 12 hineinragt, wird Wärme aufgenommen und so das Innere der Reaktionskammer 12 gekühlt. Die Wärme bewirkt einen Phasenübergang in dem Arbeitsmedium, sodass dieses gasförmig wird und in dem Wärmerohr in den oberen Bereich 136 gelangt. Dort wird über die Außenwand des Wärmerohrs Wärmeenergie abgegeben, sodass erneut ein Phasenübergang im Arbeitsmedium stattfindet und dieses im flüssigen Aggregatzustand erneut schwerkraftgetrieben oder aufgrund von Kapillarkräften in den unteren Bereich 137 des Wärmerohrs 130 gelangt. Die Wärme im oberen Bereich 136 des Wärmerohrs 130 kann beispielsweise mittels eines Kühlgebläses 140 der Kühlvorrichtung 100 an die Umgebungsluft abgeführt werden. Alternativ oder zusätzlich kann das Wärmerohr 130 im oberen Bereich durch eine Kühlleitung 150 gekühlt werden, welche von dem sekundären Kühlfluid 400 durchströmt wird.

Es versteht sich für den Fachmann, dass die verschiedenen Varianten, mit denen die dargestellte Kühlvorrichtung 100 ausgebildet ist, in beliebiger Kombination verwendet werden können, um die Reaktionskammer 12 zu kühlen. Insbesondere können mehrere Einströmeinrichtung 110 und/oder mehrere Wärmerohre 130 und/oder mehrere Kühlregister 120 vorgesehen sein. Ferner können mehrere Kühlkreisläufe für sekundäres Kühlfluid vorgesehen sein. Die Kühlvorrichtung kann darüber hinaus mehrere Kältemaschinen als Energiesenken und/oder zusätzlich oder alternativ Kühlwasserkreisläufe besitzen.

Abweichend von der dargestellten Ausführungsform, bei der das Kühlregister 120 von dem sekundären Kühlfluid 400 unmittelbar durchströmt wird, kann das Kühlregister 120 einen geschlossenen primären Kühlfluidkreislauf umfassen (gestrichelt dargestellt), der über eine weitere Wärmetauschereinheit 125 seine Wärme an das sekundäre Kühlfluid 400 abgibt, welches mit einer Energiesenke 500 in Form einer Kältemaschine und/oder einer Kühlwasserleitung oder Ähnlichem gekoppelt ist. Das sekundäre Kühlfluid 400 kann unmittelbar mit einer Kühlwasserleitung verbunden sein, sodass das Kühlwasser das sekundäre Kühlfluid 400 ist. In der Regel wird jedoch das sekundäre Kühlfluid 400 in einem geschlossenen Kühlkreislauf zirkulieren und in der Kältemaschine abgekühlt bzw. von Kühlwasser über einen Wärmetauscher abgekühlt, in dem das sekundäre Kühlfluid 400 seine Energie abgibt.

Abweichend von der dargestellten Ausführungsform können statt des Wärmerohrs 130 auch im oberen Bereich der Reaktionskammer ein oder mehrere direkt von dem sekundären Kühlfluid 400 durchströmte Kühlregister vorgesehen sein.

### Bezugszeichenliste

- 1: Vorrichtung zum Herstellen von Hologrammen
- 10: Kammern
- 11: Zuführkammer
- 12: Reaktionskammer
- 13: UV-Fixierkammer
- 14: thermische Fixierkammer
- 15: Speicherkammer
- 16: Laserkammer
- 17: Optikammer
- 20: holographisches Aufzeichnungsmaterial
- 21: Fotopolymer
- 25: Vorratsrolle
- 26: Oberseite
- 27: Unterseite
- 30: Transporteinrichtung
- 35: Speicherrolle
- 40: Hologrammmaster
- 41: Master-Volumen-Reflexionshologramm
- 46: Oberseite
- 50: Rakel
- 51: Rakelantriebs- und Führungseinrichtung
- 60: kohärente Lichtquelle
- 61: Laser
- 70: Strahlformungs- und -führungsoptik
- 71: räumlicher Lichtmodulator (spatial light modulator)
- 81: kohärentes Licht
- 82: gebeugtes/reflektiertes Licht
- 90: UV - Strahler
- 91: UV - Strahlung
- 95: Infrarot - Strahler
- 100: Kühlvorrichtung
- 110: Fluideinströmeinrichtung
- 111: Zuführgebläse
- 112: Einströmöffnung
- 113: Ausströmöffnung
- 115: Wärmetauschereinheit
- 116: Reinigungs- und Filtereinheit
- 117: Trocknungseinheit
- 120: Kühlregister
- 121: Wärmeleitplatte
- 125: weitere Wärmetauschereinheit
- 130: Wärmerohr
- 136: oberer Bereich
- 137: unterer Bereich
- 140: Kühlgebläse
- 150: Kühlleitung
- 151: Zuführleitung
- 152: Abführleitung
- 300: Kühlfluid
- 310: Vorratsspeicher
- 400: sekundäres Kühlfluid
- 500: Energiesenke

## Patentansprüche

1. Vorrichtung (1) zum Herstellen von Hologrammen im Kontaktkopierverfahren umfassend
einen Hologrammmaster (40),
eine kohärente Lichtquelle (60) zum Erzeugen kohärenten Lichts (81),
eine Transporteinrichtung (30) zum Zu- und Abführen von holografischem Aufzeichnungsmaterial (20), so dass dieses für einen Belichtungsvorgang anliegend an dem Hologrammmaster (40) angeordnet wird, und
eine Reaktionskammer (12), die den Hologrammmaster (40) umgibt und das holografische Aufzeichnungsmaterial (20) während des Belichtungsvorgangs vor Umgebungslicht und Fremdmaterial schützt, wobei das kohärente Licht (81) der kohärenten Lichtquelle (60) während des Belichtungsvorgangs in die Reaktionskammer (12) eingestrahlt wird, so dass das kohärente Licht (81) das anliegend an und vor dem Hologrammmaster (40) angeordnete holografische Aufzeichnungsmaterial durchstrahlt und zumindest teilweise an dem Hologrammmaster (40) zurückgestrahlt wird, so dass im Innern des holografischen Aufzeichnungsmaterials (20) aufgrund von Interferenzen zwischen dem das holografische Aufzeichnungsmaterial (20) durchstrahlenden kohärenten Licht (81) und dem zumindest teilweise vom Hologrammmaster (40) zurückgestrahlten Licht (82) Änderungen herbeigeführt werden, die ein Hologramm ausbilden, oder so dass der Hologrammmaster (40) durchstrahlt wird, so dass ein Anteil des kohärenten Lichts (81) den Hologrammmaster (40) unverändert passiert und ein weiterer Anteil des kohärenten Lichts an dem Holgrammmaster (40) abgelenkt wird, so dass aufgrund von Interferenzen zwischen dem einen unveränderte Anteil (81) des kohärenten Lichts und dem weiteren abgelenkten Anteil des kohärenten Lichts (82) im Innern des anliegend an und hinter dem Holgrammmaster (40) angeordneten holografischen Aufzeichnungsmaterial (20) Änderungen herbeigeführt werden, die das Hologramm ausbilden,
wobei eine Kühlvorrichtung (100) zum Abführen von Wärme aus der Reaktionskammer (12) ausgebildet ist, **dadurch gekennzeichnet, dass** mindestens ein Element der Kühlvorrichtung (100) wärmeleitend mit dem Hologrammmaster (40) verbunden ist, um den Hologrammmaster (40) zu kühlen.

2. Vorrichtung (1) nach Anspruch 1, **dadurch gekennzeichnet, dass** die Kühlvorrichtung (100) ein Kühlfluid in die Reaktionskammer (12) einströmt.

3. Vorrichtung (1) nach Anspruch 1 oder 2, **dadurch gekennzeichnet, dass** die Kühlvorrichtung (100) mindestens ein Wärmerohr (130) umfasst.

4. Vorrichtung (1) nach einem der vorangehenden Ansprüche, **dadurch gekennzeichnet, dass** mindestens ein Bauteil der Reaktionskammer wärmeleitend in Kontakt mit dem mindestens einen Wärmerohr und/oder einem weiteren Element der Kühlvorrichtung angeordnet sind, um die Reaktionskammer zu kühlen.

5. Vorrichtung (1) nach einem der vorangehenden Ansprüche, **dadurch gekennzeichnet, dass** die Kühlvorrichtung (100) Wärme an eine Energiesenke (500) abgibt.

6. Vorrichtung (1) nach Anspruch 5, **dadurch gekennzeichnet, dass** die Energiesenke (500) eine sekundäre Fluidströmung und/oder eine Kältemaschine umfasst.

7. Verfahren zum Herstellen von Hologrammen im Kontaktkopierprozess umfassend
(a) Bereitstellen eines Hologrammmasters (40) in einer Reaktionskammer (12), die den Hologrammmaster (40) umgibt und vor Umgebungslicht und Fremdmaterial schützt,
(b) Zuführen von holografischem Aufzeichnungsmaterial (20) in eine Reaktionskammer (12), die den Hologrammmaster (40) umgibt, so dass das holografische Aufzeichnungsmaterial (20) für einen Belichtungsvorgang anliegend an dem Hologrammmaster (40) angeordnet wird,
(c) Ausführen eines Belichtungsvorgangs, indem kohärentes Licht erzeugt und in die Reaktionskammer (12) eingestrahlt wird, so dass das kohärente Licht das anliegend an und vor dem Hologrammmaster (40) angeordnete holografische Aufzeichnungsmaterial (20) durchstrahlt und zumindest teilweise an dem Master zurückgestrahlt wird, so dass im Innern des holografischen Aufzeichnungsmaterials (20) aufgrund von Interferenzen zwischen dem das holografische Aufzeichnungsmaterial durchstrahlenden kohärenten Licht und dem zumindest teilweise vom Hologrammmaster (40) zurückgestrahlten Licht Änderungen herbeigeführt werden, die ein Hologramm ausbilden, oder so dass der Hologrammmaster (40) durchstrahlt wird und ein Anteil des kohärenten Lichts (81) den Hologrammmaster (40) unverändert passiert und ein weiterer Anteil des kohärenten Lichts (82) an dem Hologrammmaster (40) abgelenkt wird, so dass aufgrund von Interferenzen zwischen dem einen unteränderte Anteil des kohärenten Lichts (81) und dem weiteren abgelenkten Anteil des kohärenten Lichts (82) im Innern des anliegend an und hinter dem Holgrammmaster (40) angeordneten holografischen Aufzeichnungsmaterial (20) Änderungen herbeigeführt werden, die das Hologramm ausbilden,
(d) Abführen des holografischen Aufzeichnungsmaterials (20) aus der Reaktionskammer (12), wobei
(e) mittels einer Kühlvorrichtung (100) Wärme aus der Reaktionskammer (12) abgeführt wird, **dadurch gekennzeichnet, dass** mindestens ein Element der Kühlvorrichtung (100) wärmeleitend mit dem Hologrammmaster (40) verbunden ist, um den Hologrammmaster (40) zu kühlen.

8. Verfahren nach Anspruch 7, **dadurch gekennzeichnet, dass** die Verfahrensschritte (b) bis (d) iterativ ausgeführt werden, während der Verfahrensschritt (e) ausgeführt wird.

9. Verfahren nach Anspruch 7 oder 8, **dadurch gekennzeichnet, dass** die Wärme mittels der Kühlvorrichtung (100) aus der Reaktionskammer (12) abgeführt wird, die wiederum Wärme an eine Energiesenke (500) abgibt.

10. Verfahren nach einem der Ansprüche 7 bis 9, **dadurch gekennzeichnet, dass** die Wärme aus der Reaktionskammer (12) mittels eines Wärmerohrs (130) der Kühlvorrichtung (100) abgeführt wird.

## Claims

1. Device (1) for producing holograms by the contact copying method,
comprising a hologram master (40)
a hologram master (40),
a coherent light source (60) for generating coherent light (81), a transport device (30) for supplying and removing holographic
recording material (20) so that it is arranged adjacent to the hologram master (40) for an exposure process, and
a reaction chamber (12) which surrounds the hologram master (40) and protects the holographic recording material (20) from ambient light and foreign material during the exposure process, wherein the coherent light (81) of the coherent light source (60) is irradiated into the reaction chamber (12) during the exposure process, so that the coherent light (81) passes through the holographic recording material arranged adjacent to and in front of the hologram master (40) and is at least partially reflected back at the hologram master (40), so that changes are brought about inside the holographic recording material (20) due to interference between the coherent light (81) passing through the holographic recording material (20) and the light (82) at least partially reflected back from the hologram master (40). to form a hologram, or so that the hologram master (40) is transmitted so that a portion of the coherent light (81) passes through the hologram master (40) unchanged and a further portion of the coherent light (81) passes through the hologram master (40) unchanged of the coherent light is deflected at the holgram master (40), so that, due to interference between the one unchanged portion (81) of the coherent light and the further deflected portion of the coherent light (82), changes are brought about inside the holographic recording material (20) arranged adjacent to and behind the holgram master (40), which changes form the hologram forming the hologram, wherein a cooling device (100) for removing heat from the reaction chamber (12) is formed, **characterized in that** at least one element of the cooling device (100) is connected in a thermally conductive manner to the hologram master (40) in order to cool the hologram master (40).

2. Device (1) according to claim 1, **characterized in that** the cooling device (100) flows a cooling fluid into the reaction chamber (12).

3. Device (1) according to claim 1 or 2, **characterized in that** the cooling device (100) comprises at least one heat pipe (130).

4. Device (1) according to one of the preceding claims, **characterized in that** at least one component of the reaction chamber is arranged in contact in a thermally conductive manner with the at least one heat pipe and/or a further element of the cooling device in order to cool the reaction chamber.

5. Device (1) according to one of the preceding claims, **characterized in that** the cooling device (100) emits heat to an energy sink (500).

6. Device (1) according to claim 5, **characterized in that** the energy sink (500) comprises a secondary fluid flow and/or a refrigeration machine.

7. A method of producing holograms in the contact copying process comprising
(a) providing a hologram master (40) in a reaction chamber (12) which surrounds and protects the hologram master (40) from ambient light and foreign material,
(b) feeding holographic recording material (20) into a reaction chamber (12) surrounding the hologram master (40) so that the holographic recording material (20) is positioned adjacent to the hologram master (40) for an exposure process,
(c) carrying out an exposure process by generating coherent light and irradiating it into the reaction chamber (12) so that the coherent light passes through the holographic recording material (20) arranged adjacent to and in front of the hologram master (40) and is at least partially reflected back at the master, so that changes which form a hologram are brought about inside the holographic recording material (20) due to interference between the coherent light passing through the holographic recording material and the light at least partially reflected by the hologram master (40), or so that the hologram master (40) is irradiated and a portion of the coherent light (81) passes the hologram master (40) unchanged light (81) passes the hologram master (40) unchanged and a further portion of the coherent light (82) is deflected at the hologram master (40), so that, due to interference between the one changed portion of the coherent light (81) and the further deflected portion of the coherent light (82), changes are brought about inside the holographic recording material (20) arranged adjacent to and behind the hologram master (40), which changes form the hologram,
(d) discharging the holographic recording material (20) from the reaction chamber (12), wherein
(e) heat is removed from the reaction chamber (12) by means of a cooling device (100), **characterized in that** at least one element of the cooling device (100) is connected in a thermally conductive manner to the hologram master (40) in order to cool the hologram master (40).

8. Method according to claim 7, **characterized in that** the method steps (b) to (d) are carried out iteratively while process step (e) is carried out.

9. Process according to claim 7 or 8, **characterized in that** the heat is dissipated from the reaction chamber (12) by means of the cooling device (100), which in turn dissipates heat to an energy sink (500).

10. Method according to one of claims 7 to 9, **characterized in that** the heat is dissipated from the reaction chamber (12) by means of a heat pipe (130) of the cooling device (100).

## Revendications

1. Dispositif (1) de fabrication d'hologrammes par procédé de copie de contact comprenant
un hologramme-maitre (40),
une source de lumière (60) cohérente pour générer de la lumière (81) cohérente,
un dispositif de transport (30) pour amener et enlever le matériau d'enregistrement holographique (20) de sorte que celui-ci soit disposé attenant à l'hologramme-maitre (40) pour un processus d'exposition, et
une chambre de réaction (12) qui entoure l'hologramme-maitre (40) et protège le matériau d'enregistrement holographique (20) de la lumière environnante et de matériaux étrangers pendant le processus d'exposition, où la lumière (81) cohérente de la source de lumière (60) cohérente est irradiée dans la chambre de réaction (12) pendant le processus d'exposition de sorte que la lumière (81) cohérente irradie le matériau d'enregistrement holographique attenant et disposé devant l'hologramme-maitre (40) et est réfléchie au moins partiellement sur l'hologramme-maitre (40), de sorte qu'à l'intérieur du matériau d'enregistrement holographique (20), en raison d'interférences entre la lumière (81) cohérente traversant le matériau d'enregistrement holographique (20) et la lumière (82) réfléchie au moins partiellement par l'hologramme-maitre (40), il se produit des modifications qui forment un hologramme, ou que l'hologramme-maître (40) est irradié de sorte qu'une partie de la lumière (81) cohérente traverse l'hologramme-maitre (40) non modifiée et une autre partie de la lumière cohérente est déviée sur l'hologramme-maître (40) de sorte qu'en raison d'interférences entre la partie non modifiée (81) de la lumière cohérente et l'autre partie déviée de la lumière cohérente (82) , il se produit des modifications à l'intérieur du matériau d'enregistrement holographique (20) attenant et disposé derrière l'hologramme-maître (40) qui forment l'hologramme,
dans lequel un dispositif de refroidissement (100) est prévu pour l'évacuation de chaleur provenant de la chambre de réaction (12), **caractérisé en ce qu'**au moins un élément du dispositif de refroidissement (100) est relié en conduisant la chaleur avec l'hologramme-maitre (40) afin de refroidir l'hologramme-maitre (40).

2. Dispositif (1) selon la revendication 1, **caractérisé en ce que** le dispositif de refroidissement (100) fait affluer un fluide de refroidissement dans la chambre de réaction (12).

3. Dispositif (1) selon la revendication 1 ou la revendication 2, **caractérisé en ce que** le dispositif de refroidissement (100) comprend au moins un caloduc (130).

4. Dispositif (1) selon l'une des revendications précédentes, **caractérisé en ce qu'**au moins un composant de la chambre de réaction est disposé en contact thermo-conducteur avec l'au moins un caloduc et/ou un autre élément du dispositif de refroidissement afin de refroidir la chambre de réaction.

5. Dispositif (1) selon l'une des revendications précédentes, **caractérisé en ce que** le dispositif de refroidissement (100) délivre de la chaleur à un puits d'énergie (500).

6. Dispositif (1) selon la revendication 5, **caractérisé en ce que** le puits d'énergie (500) comprend un écoulement de fluide secondaire et/ou une machine frigorifique.

7. Procédé de fabrication d'hologrammes par procédé de copie de contact comprenant
(a) préparation d'un hologramme-maitre (40) dans une chambre de réaction (12) qui entoure l'hologramme-maitre (40) et protège contre la lumière de l'environnement et les matériaux étrangers ;
(b) transfert du matériau d'enregistrement holographique (20) dans une chambre de réaction (12) qui entoure l'hologramme-maitre (40) de sorte que le matériau d'enregistrement holographique (20) est disposé attenant à l'hologramme-maitre (20) pour un processus d'exposition,
(c) exécution d'un processus d'exposition en ce que de la lumière cohérente est générée et irradiée dans la chambre de réaction (12) de sorte que la lumière cohérente irradie le matériau d'enregistrement holographique (20) disposé attenant et devant l'hologramme-maitre (40) et est au moins partiellement réfléchie sur le maitre de sorte qu'à l'intérieur du matériau d'enregistrement holographique (20), en raison d'interférences entre la lumière cohérente traversant le matériau d'enregistrement holographique et la lumière réfléchie au moins partiellement par l'hologramme-maitre (40), il se produit des modifications qui constituent un hologramme, ou que l'hologramme-maitre (40) est irradié et une partie de la lumière (81) cohérente passe inchangée à travers l'hologramme-maitre (40) et une autre partie de la lumière (82) cohérente est déviée sur l'hologramme-maitre (40) de sorte qu'en raison d'interférences entre la partie non modifiée de la lumière (81) cohérente et l'autre partie de lumière (82) cohérente déviée, il se produit des modifications qui forment l'hologramme à l'intérieur du matériau d'enregistrement holographique (20) disposé attenant et derrière l'hologramme-maitre (40),
(d) retrait du matériau d'enregistrement holographique (20) de la chambre de réaction (12), dans lequel
(e) de la chaleur est évacuée de la chambre de réaction (12) au moyen d'un dispositif de refroidissement (100), **caractérisé en ce qu'**au moins un élément du dispositif de refroidissement (100) est relié en conduisant la chaleur avec l'hologramme-maitre (40) afin de refroidir l'hologramme-maitre (40).

8. Procédé selon la revendication 7, **caractérisé en ce que** les étapes de procédé (b) à (d) sont exécutées de manière itérative, tandis que l'étape de procédé (e) est exécutée.

9. Procédé selon la revendication 7 ou la revendication 8, **caractérisé en ce que** la chaleur est évacuée de la chambre de réaction (12) au moyen du dispositif de refroidissement (100), qui délivre de nouveau de la chaleur à un puits d'énergie (500).

10. Procédé selon l'une des revendications 7 à 9, **caractérisé en ce que** la chaleur est évacuée de la chambre de réaction (12) au moyen d'un caloduc (130) du dispositif de refroidissement (100).
